# EUROPEAN PATENT APPLICATION

(11) **EP 4 131 557 A1**
(43) Date of publication of application: **08.02.2023**
(21) Application number: 20928190.6
(22) Date of filing: 31.03.2020
(51) Int. Cl.: H01M 10/0587

(54) **ELECTROCHEMICAL APPARATUS AND ELECTRONIC APPARATUS USING ELECTROCHEMICAL APPARATUS**

(71) Applicant: DONGGUAN POWERAMP TECHNOLOGY LIMITED, Dongguan, Guangdong 523000 (CN)
(72) Inventor: HAN, Xianglong, Dongguan City, Guangdong Province, 523000 (CN); LI, Xuecheng, Dongguan City, Guangdong Province, 523000 (CN)
(74) Representative: Icosa
(86) International application number: PCT/CN2020/082249
(87) International publication number: WO 2021/195906

(57) **Abstract**

An electrochemical apparatus and an electronic apparatus including the electrochemical apparatus are provided. The electrochemical apparatus includes an electrode assembly, a first adhesive member, and a second adhesive member. The electrode assembly includes electrode plates and a separator, the electrode plates and the separator are stacked sequentially and wound to form the electrode assembly, the electrode plate includes a current collector, and the electrode assembly includes a first straight section and a first bending section that are connected to each other. Along a winding direction, a terminating end of the separator exceeds a terminating end of the current collector by 1 to 5 turns, the first adhesive member is disposed on an outer surface of the first straight section, and the second adhesive member is disposed on an outer surface of the first bending section or an outer surface of the outermost current collector at the first bending section. The provision of adhesive members can alleviate the problem that the terminating end of the separator is easily damaged in the case of mechanical abuse, enhance strength of the separator along a direction perpendicular to the winding direction, and improve the safety, reliability, and service life of the electrochemical apparatus.

## Description

### TECHNICAL FIELD

This application relates to the field of energy storage technologies, and in particular, to an electrochemical apparatus and an electronic apparatus using such electrochemical apparatus.

### BACKGROUND

Electrochemical apparatuses are widely applied in fields such as consumer electronics, electric devices, electric vehicles, and electric tools as technologies for processing electrochemical apparatuses mature.

In existing electrochemical apparatuses, separators are used to terminate electrode assemblies in the process of manufacturing to improve the safety performance of the electrochemical apparatuses. However, in actual use, electrochemical apparatuses are prone to failure because separators are easily damaged in the case of mechanical abuse (for example, falling, impact, and collision), resulting in increased safety risks and reduced service life of the electrochemical apparatuses.

### SUMMARY

In view of this, it is necessary to provide an electrochemical apparatus so as to resolve at least one problem in the prior art.

For problems in the prior art, this application provides the following solutions.

This application provides an electrochemical apparatus, including an electrode assembly, a first adhesive member, and a second adhesive member. The electrode assembly includes electrode plates and a separator, the electrode plates and the separator are stacked sequentially and wound to form the electrode assembly, the electrode plate includes a current collector, and the electrode assembly includes a first straight section and a first bending section that are connected to each other. Along a winding direction, a terminating end of the separator exceeds a terminating end of the current collector by 1 to 5 turns, the first adhesive member is disposed on an outer surface of the first straight section, and the second adhesive member is disposed on an outer surface of the first bending section or an outer surface of the outermost current collector at the first bending section.

In this application, the terminating end of the separator is wound for 1 to 5 turns to form a protective layer, which effectively increases mechanical impact resistance of the outer separator. Besides, the second adhesive member is disposed on the outer surface of the first bending section or the outer surface of the outermost current collector at the first bending section, preventing the terminating separator at the first bending section from being damaged. In addition, the first adhesive member is disposed on the outer surface of the first straight section, which can enhance strength of the terminating separator at the first straight section along a direction perpendicular to the winding direction. In this way, safety and service life of electrochemical apparatuses are improved.

In at least one embodiment, the second adhesive member is disposed on the outer surface of the first bending section and includes a first extension portion, and the first extension portion is disposed on the outer surface of the first straight section. The first extension portion being disposed on the first straight section can protect the terminating separator at the connecting corner of the first straight section and the first bending section, alleviating the problem that the electrochemical apparatus fails because the terminating separator at the corner is easily damaged in the case of mechanical abuse, and improving the safety, reliability, and service life of the electrochemical apparatus.

In at least one embodiment, the second adhesive member is disposed on the outer surface of the outermost current collector at the first bending section, and the first extension portion is disposed on the outer surface of the outermost current collector at the first straight section. The first extension portion being disposed on the outer surface of the outermost current collector at the first straight section can relieve mutual pressing between the current collector and the terminating separator at the connecting corner of the first straight section and the first bending section, alleviating the problem that the electrochemical apparatus fails because the terminating separator at the corner is easily damaged in the case of mechanical abuse, and improving the safety, reliability, and service life of the electrochemical apparatus.

In at least one embodiment, along the winding direction, a width W₁ of the first extension portion satisfies 0 mm<W₁≤5 mm. Such arrangement guarantees that the first extension portion is wide enough to protect the terminating separator at the corner from being damaged, without increasing the thickness of the first straight section too much while such increase results in a decrease in energy density.

In at least one embodiment, the electrode assembly further includes a second straight section, where the second straight section is connected to the first bending section; and the second adhesive member further includes a second extension portion, where the second extension portion is disposed on an outer surface of the second straight section. In this embodiment, the provision of the second extension portion can further protect the terminating separator at the corner, alleviating the problem that the electrochemical apparatus fails because the terminating separator at the junction of the first being section and the second straight section is easily damaged in the case of mechanical abuse, and further improving the safety, reliability, and service life of the electrochemical apparatus.

In at least one embodiment, the second extension portion is disposed on an outer surface of the outermost current collector at the second straight section. The second extension portion being disposed on the outer surface of the outermost current collector at the second straight section can further relieve the mutual pressing between the current collector and the terminating separator at the junction of the first bending section and the second straight section, alleviating the problem that the electrochemical apparatus fails because the terminating separator at the corner is easily damaged in the case of mechanical abuse, and further improving the safety, reliability, and service life of the electrochemical apparatus.

In at least one embodiment, the electrochemical apparatus further includes a third adhesive member, and the electrode assembly further includes a second bending section, where two ends of the second bending section are respectively connected to a first straight section and a second straight section, and the third adhesive member is disposed on an outer surface of the second bending section or an outer surface of the outermost current collector at the second bending section. In this embodiment, the provision of the third adhesive member on the outer surface of the second bending section or the outer surface of the outermost current collector at the second bending section can prevent the terminating separator at the second bending section from being damaged, further improving the safety and service life of the electrochemical apparatus.

In at least one embodiment, along the winding direction, a width W₂ of the first adhesive member satisfies 5 mm≤W₂≤50 mm. If the width of the first adhesive member is too small, damage to the terminating separator along the winding direction in the case of mechanical abuse cannot be avoided; and if the width of the first adhesive member is too large, the thickness of the electrode assembly is affected, decreasing the energy density thereof.

In at least one embodiment, in the direction perpendicular to the winding direction, a width W₃ of the separator and a length L₂ of the first adhesive member satisfy 10 mm≤W₃-L₂≤30 mm. If the length of the first adhesive member is too small, damage to the terminating separator in the case of mechanical abuse cannot be avoided in the direction perpendicular to the winding direction; and if the length of the first adhesive member is too large, the thickness of the electrode assembly is affected, decreasing the energy density thereof.

In at least one embodiment, the electrochemical apparatus further includes a fourth adhesive member, and the fourth adhesive member adheres to an outer surface of the outermost current collector at the first straight section and the separator opposite the outer surface of the outermost current collector at the first straight section. In this embodiment, the outermost current collector at the first straight section and the corresponding terminating separator are bonded to form an integrated structure, which enhances strength of the terminating separator thereat, further alleviates the problem that the electrochemical apparatus fails in the case of mechanical abuse, improving the safety, reliability, and service life of the electrochemical apparatus.

In at least one embodiment, along the winding direction, the terminating end of the separator exceeds the terminating end of the current collector by 1 turn. In this embodiment, the terminating separator is wound for 1 turn so that the integrated structure formed by the outermost current collector at the first straight section and the terminating separator has high strength, which further improves the safety, reliability, and service life of the electrochemical apparatus.

In at least one embodiment, the fourth adhesive member covers a projection of the first adhesive member in a plane where the fourth adhesive member is located. In this embodiment, the first adhesive member and the fourth adhesive member overlap, further enhancing strength of the integrated structure formed by the outermost current collector at the first straight section and the terminating separator, which further improves the safety, reliability, and service life of the electrochemical apparatus.

In at least one embodiment, along the winding direction, a width W₄ of the fourth adhesive member and a width W₂ of the first adhesive member satisfy 4 mm≤W₄-W₂≤10 mm. In this embodiment, the fourth adhesive member exceeds, in terms of width, the first adhesive member by a specified range, enhancing strength of the integrated structure formed by the outermost current collector at the first straight section and the terminating separator along the winding direction, which further improves the safety, reliability, and service life of the electrochemical apparatus.

In at least one embodiment, in the direction perpendicular to the winding direction, a length L₄ of the fourth adhesive member and a length L₂ of the first adhesive member satisfy 4 mm≤**L**₄-L₂≤10 mm. In this embodiment, the fourth adhesive member exceeds, in terms of width, the first adhesive member by a specified range, enhancing strength of the integrated structure formed by the outermost current collector at the first straight section and the terminating separator in the direction perpendicular to the winding direction, which further improves the safety, reliability, and service life of the electrochemical apparatus.

In at least one embodiment, the electrochemical apparatus further includes a shell, where the electrode assembly is accommodated in the shell, and the first adhesive member is bonded to the shell. In this embodiment, the first adhesive member being bonded to the shell can make the electrode assembly and the shell form an integrated structure, alleviating the problem that the electrochemical apparatus fails in the case of mechanical abuse, which further improves the safety, reliability, and service life of the electrochemical apparatus.

In at least one embodiment, the separator is a polypropylene separator. The use of a separator made of polypropylene can effectively reduce the cost of the electrochemical apparatus.

This application further provides an electronic apparatus, including the foregoing electrochemical apparatus.

### BRIEF DESCRIPTION OF DRAWINGS

FIG. 1 is a schematic cross-sectional view of an electrochemical apparatus.
FIG. 2 is a schematic cross-sectional view of an electrochemical apparatus where a second adhesive surface is disposed on an outer surface of the outermost current collector at a first bending section.
FIG. 3 is a schematic cross-sectional view of the electrochemical apparatus with a third adhesive member as shown in FIG. 1.
FIG. 4 is a schematic cross-sectional view of the electrochemical apparatus with a third adhesive member as shown in FIG. 2.
FIG. 5 is a planar view of an electrochemical apparatus.
FIG. 6 is a schematic cross-sectional view of an electrochemical apparatus with a fourth adhesive member.

### Reference signs of main components:

| | |
|---|---|
| Electrochemical apparatus | 100 |
| Electrode assembly | 10 |
| Electrode plate | 11 |
| Current collector | 111 |
| First electrode plate | A |
| Second electrode plate | B |
| Separator | 12 |
| First straight section | 13 |
| Outermost current collector at first straight section | 131 |
| First bending section | 14 |
| Outermost current collector at first bending section | 141 |
| Second straight section | 15 |
| Outermost current collector at second straight section | 151 |
| Second bending section | 16 |
| Outermost current collector at second bending section | 161 |
| First adhesive member | 20 |
| Second adhesive member | 30 |
| First extension portion | 31 |
| Second extension portion | 32 |
| Third adhesive member | 40 |
| Fourth adhesive member | 50 |
| Tab | 60 |

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by persons of ordinary skill in the art based on the embodiments of the present invention without creative efforts shall fall within the protection scope of the present invention.

It should be noted that, when one component is deemed as being "connected to" another component, it can be directly connected to the another component, or there can be a component in between. When one component is deemed as being "disposed on" another component, it can be directly disposed on the another component, or there can be a component in between. The terms "top", "bottom", "upper", "lower", "left", "right", "front", "rear", and other similar expressions as used herein for illustration only.

Unless otherwise defined, all technical and scientific terms used herein shall have the same meanings as commonly understood by those skilled in the art to which the present invention belongs. The terms used herein in the specification of the present invention are only used to describe specific embodiments, and are not intended to limit the present invention.

An electrochemical apparatus is provided which includes an electrode assembly, a first adhesive member, and a second adhesive member. The electrode assembly includes electrode plates and a separator, the electrode plates and the separator are stacked sequentially and wound to form the electrode assembly, the electrode plate includes a current collector, and the electrode assembly further includes a first straight section and a first bending section that are connected to each other. Along a winding direction, a terminating end of the separator exceeds a terminating end of the current collector by 1 to 5 turns, the first adhesive member is disposed on an outer surface of the first straight section, and the second adhesive member is disposed on an outer surface of the first bending section or an outer surface of the outermost current collector at the first bending section.

In the electrochemical apparatus, the terminating end of the separator is wound for 1 to 5 turns to form a protective layer, which effectively increases mechanical impact resistance of an outer separator. The second adhesive member is disposed on an outer surface of the first bending section or an outer surface of the outermost current collector at the first bending section so as to prevent the terminating separator at the first bending section from being damaged. In addition, the first adhesive member is disposed on the outer surface of the first straight section, which can enhance strength of the terminating separator at the first straight section along a direction perpendicular to the winding direction, increasing the pass rate of electrochemical apparatuses in safety performance test, and improving the safety and service life of the electrochemical apparatuses.

The terminating end of the separator being so provided as to exceed the terminating end of the current collector by 1 to 5 turns is out of consideration of the protection effect as well as consideration of the cost of materials and energy density loss of the electrochemical apparatus. If the separator is wound too much, the cost is increased correspondingly and the energy density is reduced.

In this application, a winding direction is a direction that a point on the electrode assembly moves along the current collector or the separator from inside outward. There may be two winding directions: clockwise winding and counterclockwise winding.

In this application, one turn means one circle of trip of the wound electrode assembly along the winding direction starting at one point and ending at another point, where the end point and the start point are located on a same side of the electrode assembly.

The following describes in detail some embodiments of this application. In absence of conflicts, the following embodiments and features in the embodiments may be combined.

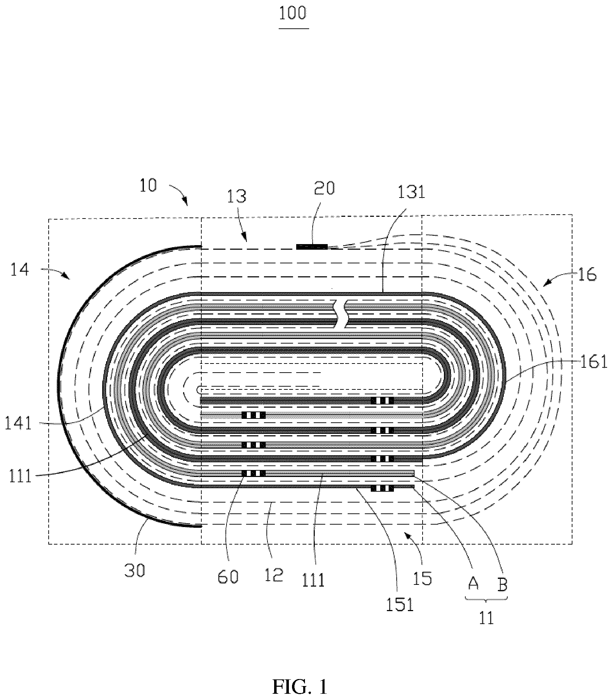

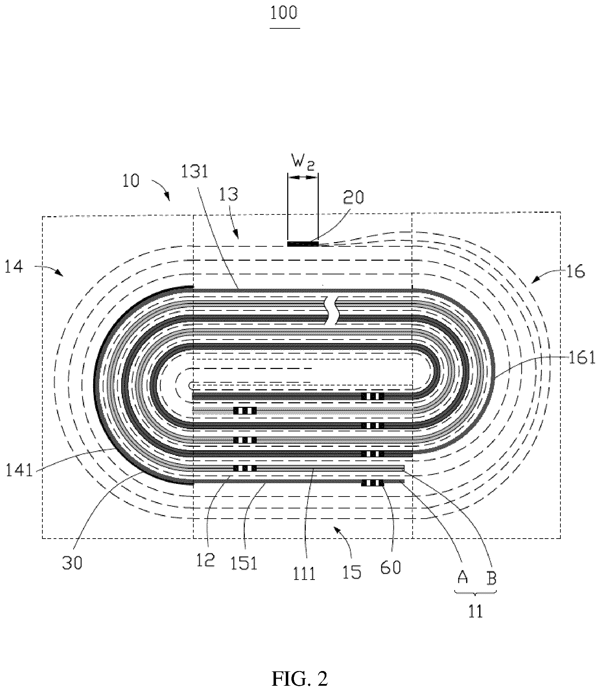

Referring to FIG. 1 and FIG. 2, an electrochemical apparatus 100 is provided and includes an electrode assembly 10, a first adhesive member 20, and a second adhesive member 30. The electrode assembly 10 includes electrode plates 11 and a separator 12, the electrode plates 11 and the separator 12 are stacked sequentially and wound to form the electrode assembly 10, the electrode plate 11 includes a current collector 111, and the electrode assembly 10 further includes a first straight section 13 and a first bending section 14 that are connected to each other. Along a winding direction, a terminating end of the separator 12 exceeds a terminating end of the current collector 111 by 1 to 5 turns, the first adhesive member 20 is disposed on an outer surface of the first straight section 13, and the second adhesive member 30 is disposed on an outer surface of the first bending section 14 or an outer surface of the outermost current collector 141 at the first bending section.

In this application, the starting end is an end where the electrode plates 11 or the separator 12 starts to be wound along the winding direction; and the terminating end is an end where the electrode plates 11 or the separator 12 terminates the winding along the winding direction.

In this application, the outer surface is a surface away from the winding starting end.

Specifically, the electrode plates 11 include a first electrode plate A and a second electrode plate B, where the separator 12 is disposed between the first electrode plate A and the second electrode plate B and wound. In an embodiment, the first electrode plate A is an anode electrode plate, and the second electrode plate B is a cathode electrode plate.

It can be understood that, in other embodiments, the first electrode plate A and the second electrode plate B may be interchangeable, meaning that the first electrode plate A is a cathode electrode plate, and the second electrode plate B is an anode electrode plate.

In an embodiment, the outermost current collector 141 at the first bending section is an aluminum foil. In an embodiment, the outermost current collector 141 at the first bending section is a copper foil. It can be understood that, in other embodiments, materials of the outermost current collector 111 are not limited thereto.

The starting end of the separator 12 and those of the electrode plates 11 are wound together. After winding of an electrode plate 11 is terminated, the outermost surface of the electrode plate 11 is typically an outer surface of the current collector 111. The terminating end of the separator 12 exceeding the terminating end of the current collector 111 by a plurality of turns can form a protective layer on the surface of the current collector 111, which effectively increases mechanical impact resistance of the outer separator, preventing the separator 12 from being damaged in the case of mechanical abuse and protecting the internal structure of the electrochemical apparatus 100 from damage under external mechanical impact force.

The electrode assembly 10 further includes a second straight section 15 and a second bending section 16. The first straight section 13 and the second straight section 15 are disposed in vertical direction (the direction shown in the drawings is for reference), with the first straight section 13 located on the top and the second straight section 15 located at the bottom. The first bending section 14 and the second bending section 16 are disposed in horizontal direction (the direction shown in the drawings is for reference), with the first bending section 14 located on the left and the second bending section 16 located on the right. Two ends of the first bending section 14 are respectively connected to one end of the first straight section 13 and one end of the second straight section 15; and two ends of the second bending section 16 are respectively connected to the other end of the first straight section 13 and the other end of the second straight section 15.

The first straight section 13, the first bending section 14, the second straight section 15, and the second bending section 16 are straight sections and bending sections that all include the electrode plates 11 and the separator 12, so that the straight sections and bending sections of the electrode plates 11 and separator 12 as a whole are divided into four zones: the first straight section 13, the first bending section 14, the second straight section 15, and the second bending section 16.

The first straight section 13 includes the outermost current collector 131 at the first straight section, and the outermost current collector 131 at the first straight section is located on the outermost layer of the current collector 111 at the first straight section 13. The first bending section 14 includes the outermost current collector 141 at the first bending section, the outermost current collector 141 at the first bending section is located on the outermost layer of the current collector 111 at the first bending section 14, and one end of the outermost current collector 131 at the first straight section is connected to one end of the outermost current collector 141 at the first bending section. Similarly, the second straight section 15 includes the outermost current collector 151 at the second straight section, the outermost current collector 151 at the second straight section is located on the outermost layer of the current collector 111 at the second straight section 15, and one end of the outermost current collector 151 at the second straight section is connected to the other end of the outermost current collector 141 at the first bending section. The second bending section 16 includes the outermost current collector 161 at the second bending section, the outermost current collector 161 at the second bending section is located on the outermost layer of the current collector 111 at the second bending section 16, and two ends of the outermost current collector 161 at the second bending section are respectively connected to one end of the outermost current collector 131 at the first straight section and one end of the outermost current collector 151 at the second straight section.

The first adhesive member 20 is disposed on an outer surface of the first straight section 13, meaning that the first adhesive member 20 is disposed on an outer surface of the separator 12 at the first straight section 13. In other words, after the terminating end of the separator 12 is coated onto the current collector 111 by plural turns, the first adhesive member 20 is disposed on the outer surface of the terminating end. Further, the first adhesive member 20 is disposed at a middle position of the first straight section 13 along the winding direction.

Along the winding direction, a width W₂ of the first adhesive member 20 satisfies 5 mm≤W₂≤50 mm. If the width of the first adhesive member 20 is too small, damage to the terminating separator 12 in the case of mechanical abuse cannot be avoided along the winding direction. If the width of the first adhesive member 20 is too large, thickness of the electrode assembly 10 is affected, decreasing the energy density thereof. Therefore, the width of the first adhesive member 20 is 5 mm≤W₂≤50 mm.

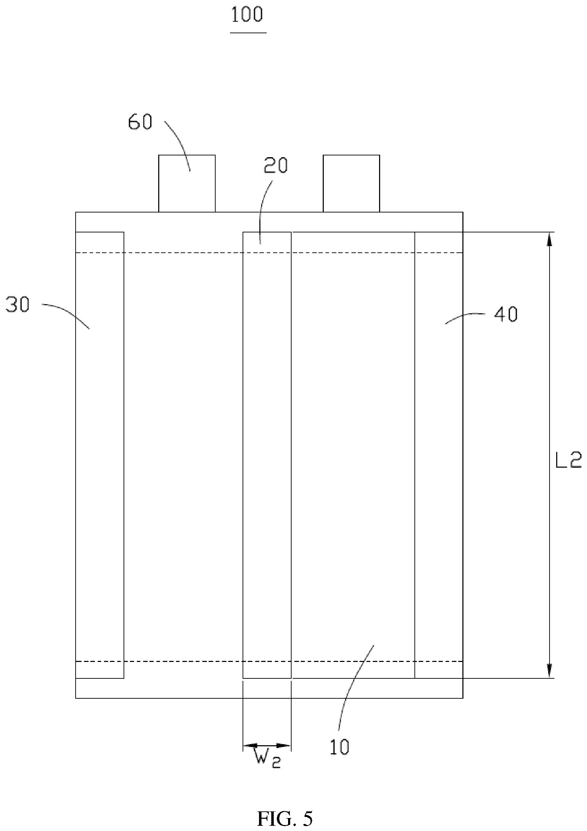

Referring to FIG. 5, along a direction perpendicular to the winding direction, a length of the first adhesive member 20 is L₂, and a width of the separator 12 is W₃. In an embodiment, the width W₃ of the separator 12 and the length L₂ of the first adhesive member 20 satisfy 10 mm≤W₃-L₂≤30 mm. If the length of the first adhesive member 20 is too small, damage to the terminating separator 12 in the case of mechanical abuse cannot be avoided in the direction perpendicular to the winding direction; and if the length of the first adhesive member 20 is too large, the thickness of the electrode assembly is affected, decreasing the energy density thereof.

It can be understood that, in other embodiments, the first adhesive member 20 may alternatively be disposed on an outer surface of the second straight section 15. To be specific, the first adhesive member 20 is disposed on an outer surface of the separator 12 at the second straight section 15. Alternatively, the first adhesive member 20 is disposed on both the outer surface of the first straight section 13 and the outer surface of the second straight section 15.

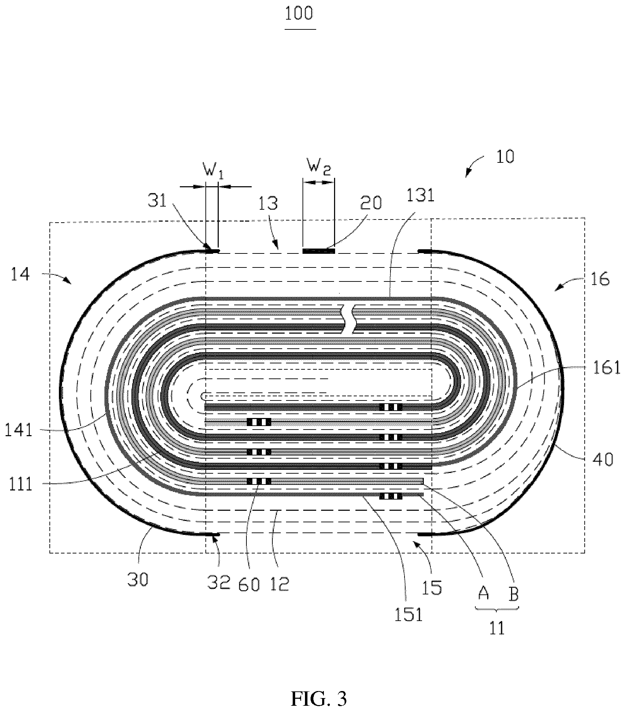

Referring to FIG. 1 and FIG. 3, in an embodiment, the second adhesive member 30 is disposed on the outer surface of the first bending section 14. Further, one end of the second adhesive member 30 includes a first extension portion 31, and the first extension portion 31 is disposed on the outer surface of the first straight section 13. The second adhesive member 30 is disposed on the outer surface of the first bending section 14, and the first extension portion 31 on the end thereof is disposed on the first straight section 13 connected to the first bending section 14, which can effectively protect a transition section between the first bending section 14 and the first straight section 13 and protect the terminating separator 12 at the junction of the first straight section 13 and the first bending section 14, alleviating the problem that the electrochemical apparatus 100 fails because the terminating separator 12 at the junction is easily damaged in the case of mechanical abuse, and improving the safety, reliability, and service life of the electrochemical apparatus.

Along the winding direction, the width W₁ of the first extension portion 31 satisfies 0 mm<W₁≤5 mm. To be specific, the first extension portion 31 should be ensured to extend beyond the first bending section 14 to the first straight section 13. Such arrangement guarantees that the first extension portion 31 is wide enough to protect the terminating separator 12 at the corner from being damaged, without increasing the thickness of the first straight section 13 too much while such increase results in a decrease in energy density.

The other end of the second adhesive member 30 further includes a second extension portion 32, and the second extension portion 32 is disposed on the outer surface of the second straight section 15. The structure and width of the second extension portion 32 are roughly the same as those of the first extension portion 31. The second extension portion 32 is disposed to further protect corners of the terminating separator 12, which alleviates the problem that the electrochemical apparatus 100 fails because the terminating separator 12 at the junction of the first bending section 14 and the second straight section 15 is easily damaged in the case of mechanical abuse, further improving the safety, reliability, and service life of the electrochemical apparatus.

Referring to FIG. 3, the electrochemical apparatus 100 further includes a third adhesive member 40, and the third adhesive member 40 is disposed on an outer surface of the second bending section 16. Such arrangement can effectively prevent the terminating separator 12 at the second bending section 16 from being damaged, further improving the safety and service life of the electrochemical apparatus 100. Furthermore, the third adhesive member 40 has the same shape and structure as the second adhesive member 30, and a difference between them only lies in that one is disposed on the first bending section 14 and the other is disposed on the second bending section 16. The adhesive members being respectively disposed on the first bending section 14 and second bending section 16 of the electrode assembly 10 can effectively protect the first straight section 13, the first bending section 14, and the second bending section 16.

The terminating end of the separator 12 can be wound to the first bending section 14 or second bending section 16 of the electrode assembly 10, and is secured by the second adhesive member 30 or third adhesive member 40.

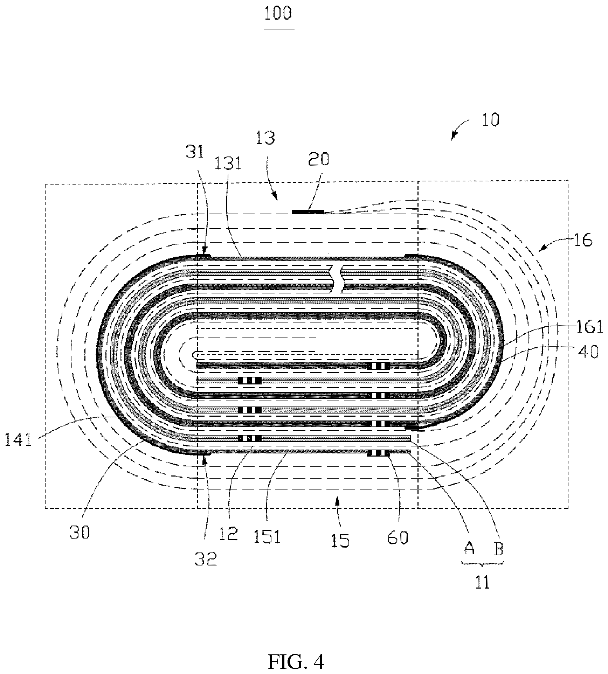

Referring to FIG. 2 and FIG. 4, in another embodiment, the second adhesive member 30 is disposed on the outer surface of the outermost current collector 141 at the first bending section, and the first extension portion 31 of the second adhesive member 30 is disposed on an outer surface of the outermost current collector 131 at the first straight section. The second extension portion 32 of the second adhesive member 30 is disposed on an outer surface of the outermost current collector 151 at the second straight section.

The first extension portion 31 is disposed on the outer surface of the outermost current collector 131 at the first straight section, which can relieve mutual pressing between the current collector 111 and the terminating separator 12 at the connecting corner of the first straight section 13 and the first bending section 14, alleviating the problem that the electrochemical apparatus fails because the terminating separator 12 at the connecting corner is easily damaged in the case of mechanical abuse, which improves the safety, reliability, and service life of the electrochemical apparatus. The second extension portion 32 is disposed on the outer surface of the outermost current collector 151 at the second straight section, which can also relieve the mutual pressing between the current collector 111 and the terminating separator 12 at the junction of the first bending section 14 and the second straight section 15, thereby avoiding failure of the electrochemical apparatus 100.

Similarly, when the second adhesive member 30 is disposed on the outer surface of the outermost current collector 141 at the first bending section, the third adhesive member 40 may be also disposed on an outer surface of the outermost current collector 161 at the second bending section, so as to alleviate the problem that the terminating separator 12 at the second bending section is easily damaged.

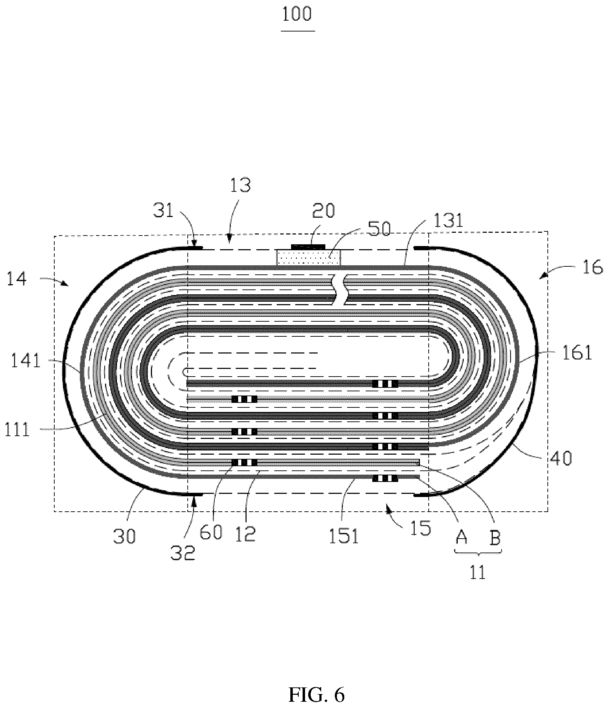

Referring to FIG. 6, the electrochemical apparatus 100 further includes a fourth adhesive member 50 and the fourth adhesive member 50 adheres to an outer surface of the outermost current collector 131 at the first straight section and the separator 12 opposite the outer surface of the outermost current collector 131 at the first straight section. The outermost current collector 131 at the first straight section and the corresponding terminating separator 12 are bonded to form an integrated structure, which enhances strength of the terminating separator 12 thereat, further alleviating the problem that the electrochemical apparatus 100 fails in the case of mechanical abuse, and improving the safety, reliability, and service life of the electrochemical apparatus.

In an embodiment, along the winding direction, the terminating end of the separator 12 exceeds the terminating end of the current collector 111 by 1 turn. In this case, the integrated structure formed by the outermost current collector 131 at the first straight section and the terminating separator 12 is stronger, which further improves the safety, reliability, and service life of the electrochemical apparatus 100.

Furthermore, the fourth adhesive member 50 covers a projection of the first adhesive member 20 in a plane where the fourth adhesive member 50 is located. The first adhesive member 20 and the fourth adhesive member 50 overlap, further enhancing strength of the integrated structure formed by the outermost current collector 131 at the first straight section and the terminating separator 12, which further improves the safety, reliability, and service life of electrochemical apparatuses.

In an embodiment, along the winding direction, a width W₄ of the fourth adhesive member 50 and a width W₂ of the first adhesive member satisfy 4 mm≤W₄-W₂≤10 mm. In an embodiment, in the direction perpendicular to the winding direction, a length L₄ of the fourth adhesive member 50 and a length L₂ of the first adhesive member satisfy 4 mm≤**L**₄-L₂≤10 mm. This means that the fourth adhesive member 50 is wider than the first adhesive member 20, and the fourth adhesive member 50 is longer than the first adhesive member 20. In this way, the fourth adhesive member 50 can effectively secure the outermost current collector 131 at the first straight section and the separator 12. The safety of the electrode assembly 10 is significantly improved as found in safety performance test.

Referring to FIG. 1, the electrode plate 11 is further provided with a tab 60 welded to the electrode plate 11. It can be understood that, in other embodiments, the electrode plate 11 and the tab 60 may be an integratedly formed structure.

The electrochemical apparatus 100 further includes a shell (not shown in the figure), in which the electrode assembly 10 is accommodated. The first adhesive member 20, the second adhesive member 30 disposed on the outer surface of the first bending section 14, and the third adhesive member 40 disposed on the outer surface of the second bending section 16 may be also bonded onto the shell. However, the second adhesive member 30 being disposed on the outermost current collector 141 at the first bending section and the third adhesive member 40 being disposed on the outermost current collector 161 at the second bending section may be bonded to the shell only through the first adhesive member 20.

The electrode assembly 10 is bonded onto the shell through the first adhesive member 20, the second adhesive member 30, and the third adhesive member 40, which can avoid failure of the electrode assembly 10 under external impact, thereby improving the safety of the electrode assembly 10.

This application further includes an electronic apparatus (not shown in the figure), and the electronic apparatus includes the electrochemical apparatus 100. Specifically, the electronic apparatus may be a mobile phone, a digital product, a tablet computer, a wearable device, an unmanned aerial vehicle, an electric tool, an energy storage apparatus, an electric vehicle, or the like.

In an embodiment, the separator 12 is made of a polypropylene film or a polyethylene film.

In an embodiment, the separator 12 is made of a polypropylene film. Compared with polyethylene films, polypropylene films cost less but are less strong. The separator 12 being made of a polypropylene film can reduce 40% to 60% of the cost, which significantly reduces the overall cost of the electrochemical apparatus 100. The terminating end of the separator 12 being wound for 1 to 5 turns and the provision of the first adhesive member and the second adhesive member enhance strength of the polypropylene film, which improves the safety, reliability, and service life.

To sum up, in the electrochemical apparatus 100 provided in this application, the terminating end of the separator 12 is wound around the electrode assembly 10 for 1 to 5 turns, which provides additional protection when the electrode assembly 10 is subjected to external impact, preventing the separator 12 inside the electrode assembly 10 from being damaged. In addition, the first adhesive member 20 is disposed on the outer surface of the electrode assembly 10 and the second adhesive member 30 is disposed on the outer surface of the first bending section 14 or the outer surface of the outermost current collector 141 at the first bending section, enhancing strength of the separator in the electrode assembly 10, which further increases the pass rate of electrochemical apparatuses 100 in safety performance test, and improves safety and service life.

Furthermore, those of ordinary skill in the art should be aware of that the foregoing embodiments are only intended to describe the present invention, but not to limit the present invention. Appropriate modifications and variations made to the foregoing embodiments without departing from the essential spirit and scope of the present invention all fall within the protection scope of the present invention.

## Claims

1. An electrochemical apparatus, comprising an electrode assembly, a first adhesive member, and a second adhesive member,
wherein the electrode assembly comprises electrode plates and a separator, the electrode plates and the separator are stacked sequentially and wound to form the electrode assembly, the electrode plates each comprise a current collector, and the electrode assembly comprises a first straight section and a first bending section that are connected to each other; and
along a winding direction, a terminating end of the separator exceeds a terminating end of the current collector by 1 to 5 turns, the first adhesive member is disposed on an outer surface of the first straight section, and the second adhesive member is disposed on an outer surface of the first bending section or an outer surface of the outermost current collector at the first bending section.

2. The electrochemical apparatus according to claim 1, wherein the second adhesive member is disposed on the outer surface of the first bending section and comprises a first extension portion, the first extension portion being disposed on the outer surface of the first straight section.

3. The electrochemical apparatus according to claim 1, wherein the second adhesive member is disposed on the outer surface of the outermost current collector at the first bending section and comprises a first extension portion, the first extension portion being disposed on an outer surface of the outermost current collector at the first straight section.

4. The electrochemical apparatus according to claim 2 or 3, wherein along the winding direction, a width W₁ of the first extension portion satisfies 0 mm<W₁≤5 mm.

5. The electrochemical apparatus according to claim 2, wherein the electrode assembly further comprises a second straight section, the second straight section being connected to the first bending section; and
the second adhesive member further comprises a second extension portion, the second extension portion being disposed on an outer surface of the second straight section.

6. The electrochemical apparatus according to claim 3, wherein the electrode assembly further comprises a second straight section, the second straight section being connected to the first bending section; and the second adhesive member further comprises a second extension portion, the second extension portion being disposed on an outer surface of the outermost current collector at the second straight section.

7. The electrochemical apparatus according to claim 5, wherein the electrochemical apparatus further comprises a third adhesive member;
the electrode assembly further comprises a second bending section, wherein two ends of the second bending section are respectively connected to the first straight section and the second straight section; and
the third adhesive member is disposed on an outer surface of the second bending section.

8. The electrochemical apparatus according to claim 6, wherein the electrochemical apparatus further comprises a third adhesive member;
the electrode assembly further comprises a second bending section, wherein two ends of the second bending section are respectively connected to the first straight section and the second straight section; and
the third adhesive member is disposed on an outer surface of the outermost current collector at the second bending section.

9. The electrochemical apparatus according to claim 1, wherein along the winding direction, a width W₂ of the first adhesive member satisfies 5 mm≤W₂≤50 mm.

10. The electrochemical apparatus according to claim 1, wherein along a direction perpendicular to the winding direction, a width W₃ of the separator and a length L₂ of the first adhesive member satisfy 10 mm≤W₃-L₂≤30 mm.

11. The electrochemical apparatus according to claim 2, wherein the electrochemical apparatus further comprises a fourth adhesive member, and the fourth adhesive member adheres to an outer surface of the outermost current collector at the first straight section and the separator opposite the outer surface of the outermost current collector at the first straight section.

12. The electrochemical apparatus according to claim 11, wherein along the winding direction, the terminating end of the separator exceeds the terminating end of the current collector by 1 turn.

13. The electrochemical apparatus according to claim 11, wherein the fourth adhesive member covers a projection of the first adhesive member in a plane where the fourth adhesive member is located.

14. The electrochemical apparatus according to claim 13, wherein along the winding direction, a width W₄ of the fourth adhesive member and a width W₂ of the first adhesive member satisfy 4 mm≤W₄-W₂≤10 mm.

15. The electrochemical apparatus according to claim 13, wherein along a direction perpendicular to the winding direction, a length L₄ of the fourth adhesive member and a length L₂ of the first adhesive member satisfy 4 mm≤**L**₄-L₂≤10 mm.

16. The electrochemical apparatus according to claim 1, wherein the electrochemical apparatus further comprises a shell, the electrode assembly is accommodated in the shell, and the first adhesive member is bonded to the shell.

17. The electrochemical apparatus according to claim 1, wherein the separator is a polypropylene separator.

18. An electronic apparatus, comprising the electrochemical apparatus according to claim 1.
